**Europäisches Patentamt**

(19) **European Patent Office**

**Office européen des brevets**

(11) Numéro de publication: **0 149 374**
**B1**

(12) # FASCICULE DE BREVET EUROPÉEN

(45) Date de publication du fascicule du brevet:
22.07.87

(51) Int. Cl.⁴: **H 02 B 1/08,** A 47 B 49/00

(21) Numéro de dépôt: **84402257.4**

(22) Date de dépôt: **09.11.84**

(54) Armoire d'équipement électrique ou électronique.

(30) Priorité: **09.11.83 FR 8317777**

(43) Date de publication de la demande:
**24.07.85 Bulletin 85/30**

(45) Mention de la délivrance du brevet:
**22.07.87 Bulletin 87/30**

(84) Etats contractants désignés:
**BE CH DE GB IT LI LU NL**

(56) Documents cité:
**WO-A-83/00609**
**DE-C-888 878**
**FR-A-1 391 360**
**GB-A-2 034 528**

(73) Titulaire: **ENTREPRISES SAUNIER DUVAL, 250, Route de l'Empereur, F-92508 Rueil- Malmaison (FR)**

(72) Inventeur: **Samson, Gérard, 20, Impasse Messager, F-93100 Montreuil (FR)**

(74) Mandataire: **Lhuillier, René, ARMENGAUD JEUNE CABINET LEPEUDRY 6, rue du Fg. St- Honoré, F-75008 Paris (FR)**

EP 0 149 374 B1

## Description

L'invention se rapporte à une armoire destinée à être utilisée comme support d'équipement électrique ou électronique et concerne plus précisément une armoire rotative à rotation contrôlée.

On sait que les systèmes destinés à assembler et connecter des appareils électriques, tels que panneaux de relais, cartes de circuits électroniques, contacteurs, etc... sont avantageusement disposés dans des bâtis ou des armoires qui doivent être accessibles et qui regroupent les câbles de connexion. On utilise de façon courante des tiroirs coulissants dans lesquels sont regroupées par exemple des cartes de connexion ou des platines portant des équipements dont la filerie sort à l'arrière du tiroir et se regroupe au fond de l'armoire. D'autres armoires fixes connues écartées du mur sont munies de simples portes à l'avant et à l'arrière ce qui permet une accessibilité des deux côtés. Enfin certains types de chassis ont des portes pivotantes qui servent elles-mêmes de cadre-support à ces équipements électriques ou électroniques. On peut ainsi travailler très aisément sur ces équipements quand les portes sont ouvertes. Bien que largement utilisés, ces systèmes ne se prêtent pas aisément à toutes les installations car ils présentent un certain nombre d'inconvénients.

En effet les systèmes à armoires fixe, utilisant ou non des tiroirs, munies de portes avant et arrière nécessitent des deux côtés un couloir d'accès de dimension suffisante pour l'ouverture des portes et les manoeuvres de contrôle et de réparation. La surface à prévoir au sol pour chaque module d'armoire est donc importante, ce qui pose des problèmes de coût et d'implantation.

Les armoires à cadre pivotant ou portes mobiles qui supportent des équipements, peuvent résoudre ce problème de place. Mais pour supporter le poids de ces équipements, le chassis de ces portes mobiles doit être particulièrement résistant et le porte-à-faux ainsi réalisé nécessite un ancrage sérieux du chassis fixe (Voir les documents GB-A- 2 034 528 et FR-A- 1 391 360) En outre, comme il est d'usage d'accoler par leurs faces latérales plusieurs de ces modules formés d'armoires à cadre mobile, le débattement de la porte est une gêne quand on veut intervenir sur des armoires voisines. Enfin dans ce type de système, la câblerie est soumise à des contraintes et l'on rencontre des difficultés de peignage des câbles.

L'invention apporte une solution à ces divers inconvénients en ce qu'elle propose une armoire d'équipement électrique ou électronique qui est elle-même rotative sur son axe de révolution par rapport à un socle fixe, permettant l'orientation vers l'avant de ses quatre faces.

L'invention concerne une armoire d'équipement électrique ou électronique comprenant les caractéristiques contenues dans la revendication 1.

Selon une caractéristique de l'invention le chassis de l'armoire est monté sur une couronne d'un profilé en forme de U qui lui-même repose sur au moins trois galets de roulement à axe horizontal solidaires du socle fixe, et le fond du chassis à l'intérieur du profilé, est ouvert pour permettre le passage de la câblerie vers le caniveau de distribution prévu sous le socle.

D'autres caractéristiques et avantages de l'invention apparaîtront à la lecture de la description qui va suivre d'un exemple de réalisationen référence aux dessins annexés qui représentent:

- figure 1 : une vue en perspective de l'armoire rotative,
- figure 2 : une vue en coupe selon AA de la figure 1,
- figure 3 : une vue agrandie de l'encadré de la figure 2.

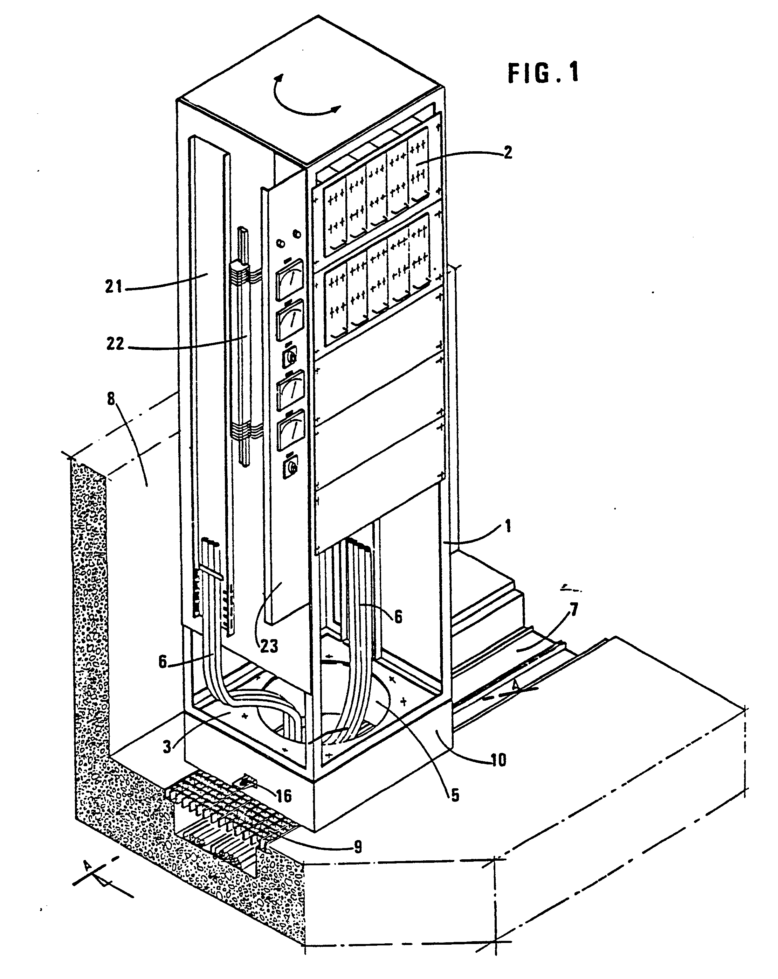

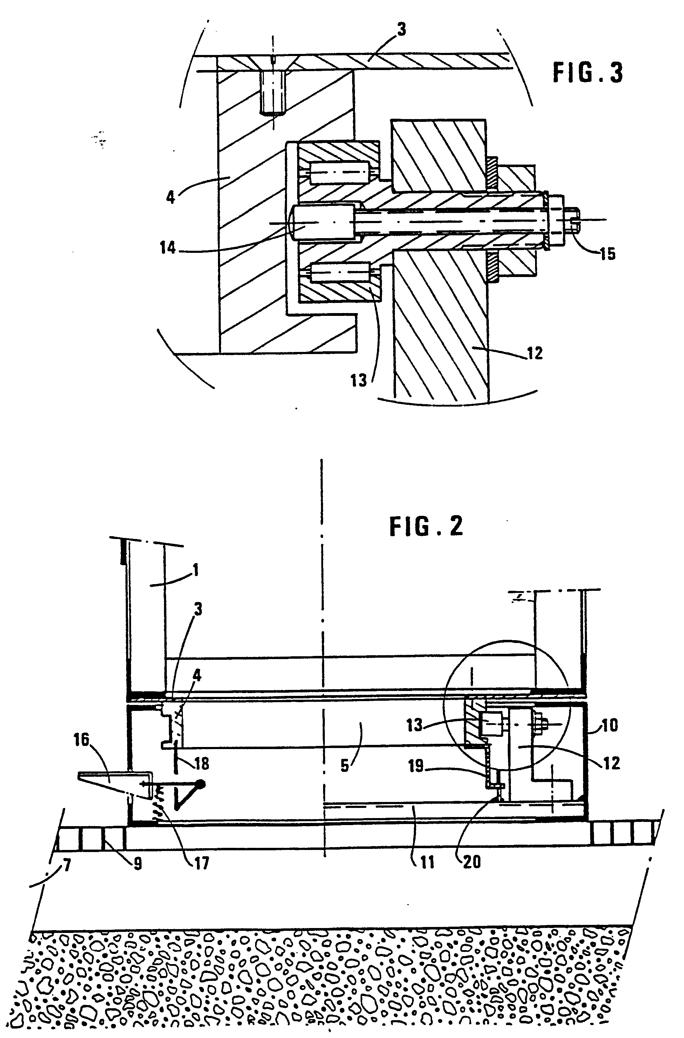

L'armoire rotative illustrée aux figures 1 et 2, de forme parallélépipédique, comporte un chassis 1 formé de cornières, qui sert de cadre-support à un certain nombre de platines 2 portant des éléments d'équipement amovibles. Ces platines réparties sur un certain nombre de niveaux sont maintenues dans le cadre par des moyens classiques non représentés. A la base du chassis 1 est prévue une tôle de fond 3 sous laquelle est fixée une couronne 4 d'un profilé en forme de U.

La partie centrale de la tôle de fond 3 est évidée entre la couronne pour former une ouverture 5 de passage des câbles 6 entre le chassis mobile 1 et le caniveau fixe de distribution 7. Ce dernier permet de loger les câbles qui alimentent non seulement l'armoire représentée mais des armoires voisines alignées par exemple à proximité d'un mur 8 du local. Des caillebotis de protection 9 couvrent le caniveau. Un socle fixe 10 placé à l'endroit voulu au-dessus du caniveau se présente comme un boîtier résistant muni d'une plaque de base 11. Sur cette plaque sont montées des équerres-support 12 qui portent chacune un galet de roulement 13 à axe horizontal. Comme on le voit aux figures 2 et 3, les galets 13 sont engagés à l'intérieur du profilé de la couronne 4 qui repose ainsi sur au moins trois galets porteurs. Un système de butée 14 réglable de l'extérieur par la vis 15 permet d'ajuster le positionnement transversal de chaque galet porteur 13 par rapport à la couronne 4 tout en limitant les forces de frottement contre le fond du profilé. Une pédale de blocage 16 rappelée par un ressort 17, permet de dégager un doigt 18 d'un logement de dimension voisine prévu dans la couronne 4. Quand le doigt 18 a échappé de ce logement par action sur la pédale, on peut faire pivoter l'armoire. Plusieurs logements prévus sur la couronne permettent le verrouillage de l'armoire dans des positions préétablies par rapport au mur 8, par exemple à 0°, 90° ou 180°. Toutefois pour éviter des rotations successives de l'armoire, dans le même sens, rotations qui seraient préjudiciables au positionnement des câbles 6, on prévoit une butée mobile 19 solidaire de la couronne 4, dont le déplacement est entravé par une butée fixe 20 liée au socle 10.

Cette disposition d'armoire rotative sur elle-même facilite l'implantation de plusieurs armoires voisines, écartées entre elles ou écartées du mur de la seule distance nécessaire à leur débattement, c'est-à-dire une diagonale de 'l'armature 1. On peut donc profiter de cet espacement pour le passage d'un jeu de câbles 6 à l'extérieur de l'armoire dans une goulotte 21, pour la fixation d'un bornier 22, ou encore d'une platine annexe 23 servant de support à des compteurs ou appareils de mesure complémentaires.

**Revendications**

1. Armoire d'équipement électrique ou électronique destinée à regrouper, connecter et supporter divers appareillages caractérisée en ce qu'elle est constituée d'un chassis (1) rotatif sur lui-même autour de son axe vertical de révolution, par rapport à un socle fixe (10) qui lui sert de support et au travers duquel passent les câbles (6) reliés aux équipements.

2. Armoire selon la revendication 1 caractérisée par le fait qu'une couronne (4) formée d'un profilé en forme de U, fixée au chassis rotatif (1), est en appui sur au moins trois galets de roulement (13), chacun à axe horizontal et solidaires du socle fixe (10), et ménage une ouverture centrale (5) de passage des câbles (6) vers le chassis.

3. Armoire selon la revendication 2 caractérisée par le fait qu'un système de butée (14) réglable de l'extérieur par une vis (15) permet d'ajuster le positionnement transversal de chaque galet de roulement (13) par rapport à la couronne (4).

4. Armoire selon les revendications 1 et 2 caractérisée par le fait que son verrouillage dans des positions prédéterminées est assuré par un doigt (18) qui est manoeuvré à l'intérieur du socle fixe (10) par une pédale (16) rappelée par un ressort (17) et qui pénètre dans un des logements de dimension voisine prévus sur la couronne (4).

5. Armoire selon la revendication 2 caractérisée par le fait que sa rotation dans un même sens est limitée par au moins une butée mobile (19) solidaire de la couronne (4), dont le déplacement est entravé par une butée fixe (20) liée au socle (10).

**Patentansprüche**

1. Elektrischer oder elektronischer Schaltschrank zum Umgruppieren, Zusammenschalten oder zur Aufnahme verschiedener Apparaturen,
   dadurch gekennzeichnet,
   daß er aus einem Rahmen (1) gebildet ist, der um sich selbst um eine senkrechte Drehachse bezüglich eines ihm als Stütze dienenden festen Sockels (10) drehbar ist, durch den die an den Schaltelementen angeschlossenen Kabel (6) verlaufen.

2. Schrank nach Anspruch 1,
   dadurch gekennzeichnet,
   daß ein aus einem U-Profil gebildeter Drehkranz (4) an dem drehbaren Rahmen (1) auf wenigstens drei Laufrollen (13) gelagert ist, die jeweils eine horizontale, mit dem festen Sockel (10) verbundene Achse aufweisen, und daß der Drehkranz eine mittige Öffnung (5) für den Durchtritt der Kabel (6) zum Rahmen aufweist.

3. Schrank nach Anspruch 2,
   dadurch gekennzeichnet,
   daß ein von außen mittels einer Schraube (15) einstellbares Anschlagsystem (14) die Quereinstellung jeder Laufrolle (13) in bezug auf den Drehkranz (4) erlaubt.

4. Schrank nach den Ansprüchen 1 und 2,
   dadurch gekennzeichnet,
   daß seine Verriegelung in vorbestimmten Stellungen durch einen Zapfen (18) gesichert ist, der im Inneren des festen Sockels (10) über ein mittels einer Feder (17) zurückholbares Pedal (16) bedienbar ist und der in eine der vergleichbare Abmessungen aufweisende Rasten auf dem Drehkranz (4) eingreift.

5. Schrank nach Anspruch 2,
   gekennzeichnet dadurch,
   daß seine Drehung in ein und derselben Richtung durch wenigstens einen beweglichen, am Drehkranz (4) festen Anschlag (19) begrenzt ist, dessen Verschiebung durch einen am Sockel (10) angeordneten Anschlag (20) gehemmt ist.

**Claims**

1. Cabinet for electrical or electronic equipment intended for assembling, connecting and supporting various pieces of equipment, characterised in that it is constituted by a frame (1) able to rotate about itself about its vertical axis of revolution, with respect to a fixed stand (10) which serves it as a support and through which pass the cables (6) connected to the pieces of equipment.

2. Cabinet according to Claim 1, characterised by the fact that a ring (4) formed by a U-shape sectional member, fixed to the rotary frame (1), rests on at least three runners (13), each having a horizontal axis and integral with the fixed stand (10) and provides a central opening (5) for the passage of the cables (6) towards the frame.

3. Cabinet according to Claim 2, characterised by the fact that a stop system (14) adjustable from the outside by means of a screw (15) makes it possible to adjust the transverse positioning of each runner (13) with respect to the ring (4).

4. Cabinet according to Claims 1 and 2, characterised by the fact that its locking in predetermined positions is ensured by a pin (18) which is operated inside the fixed stand (10) by a pedal (16) spring-loaded by a spring (17) and which penetrates in one of the housings of similar dimensions provided on the ring (4).

5. Cabinet according to Claim 2, characterised by the fact that its rotation in one direction is limited by at least one movable stop (19) integral with the ring (4), the movement of which is impeded by a fixed stop (20) connected to the stand (10).

FIG.1

0 149 374

FIG . 3

FIG . 2